# EUROPEAN PATENT APPLICATION

(11) **EP 2 441 809 A1**
(43) Date of publication of application: **18.04.2012**
(21) Application number: 10786084.3
(22) Date of filing: 01.06.2010
(51) Int. Cl.: C09D 133/04, C09D 5/16, C09D 7/12

(54) **ANTIFOULING COATING COMPOSITION, ANTIFOULING COATING FILM FORMED FROM THE COMPOSITION, COATED OBJECT HAVING THE COATING FILM ON SURFACE, AND METHOD OF ANTIFOULING TREATMENT BY FORMING THE COATING FILM**

(30) Priority: 08.06.2009 JP 2009137133
(71) Applicant: Nitto Kasei Co., Ltd., Osaka-shi Osaka 533-0031 (JP)
(72) Inventor: IWAMOTO, Tsuyoshi, Osaka-shi Osaka 533-0031 (JP); YASUI, Takuya, Osaka-shi Osaka 533-0031 (JP); KITAMURA, Hitoshi, Osaka-shi Osaka 533-0031 (JP); FUJIMOTO, Takayoshi, Osaka-shi Osaka 533-0031 (JP)
(74) Representative: Gulde Hengelhaupt Ziebig & Schneider
(86) International application number: PCT/JP2010/059229
(87) International publication number: WO 2010/143553

(57) **Abstract**

The present invention provides an antifouling coating material which can be used to form an antifouling coating film excellent in long-term antifouling performance and physical properties, and which is excellent in long-term storage stability. The present invention provides an antifouling coating composition containing a copolymer [A] obtained by copolymerizing a monomer represented by a general formula (1) (wherein, X represents acryloyloxy, methacryloyloxy, crotonoyloxy, or isocrotonoyloxy, R¹ represents a hydrogen atom or methyl, and R² represents an alkyl group having a carbon number of 1 to 6), and a polymerizable monomer represented by a general formula (2) (wherein, R³ represents a hydrogen atom or methyl, R⁴ represents an alkyl group having a carbon number of 1 to 10, or an alkyl group having a carbon number of 2 to 5 to which an alkoxy group having a carbon number of 1 to 4 is bonded.).

## Description

### TECHNICAL FIELD

The present invention relate to an antifouling coating composition, an antifouling coating film formed by use of the composition, a coated object having the coating film thereon, and a method of antifouling treatment by forming the coating film, in order to prevent, over a long period of time, attachment of aquatic fouling organisms to substances used or existing in seawater, such as a ship, a fishing net, a float, a power plant coolant conduit.

### BACKGROUND ART

It has been known that barnacle, serpula, common mussel, bugula neritina, sea squirt, green laver, sea lettuce, slime, and like aquatic fouling organism attach to a ship (especially ship bottom), a fishing net, a fishing net accessory and like fishing tools, and a power plant aqueduct and like structures submerged in seawater, and this causes decrease in vessel speed and water flow rate, which result in losses in terms of economy and resources. Then, efforts have been made to solve the aforementioned problem by applying an antifouling coating material to prevent attachment of the aquatic fouling organisms.

Among these, "organic tin-based hydrolyzable coating material", which is an antifouling coating material whose main components are tributyl tin methacrylate copolymer and cuprous oxide has been widely used. When the coating film formed of the coating material contacts seawater, the resin residing on the surface of the coating film contacts the seawater and is sequentially hydrolyzed to become water-soluble, and concurrently releases a chemical agent. This coating material is known as a self-polishing type coating material, and exhibits an excellent antifouling effect.

However, the organic tin-based hydrolyzable coating material cannot be used any more because of the concern of marine pollution by a tributyl tin compound released by the hydrolysis.

Then, various researches have been made to seek an antifouling coating material to replace the organic tin compound.

For example, in Patent Document 1, there is proposed an antifouling coating material containing, as a resin component, a copolymer obtained by polymerizing an alkoxycarbonylalkyl (meth)acrylate ester. Patent Document 1 describes that the antifouling coating material exhibits the antifouling effect by the dissolution of the copolymer without hydrolysis. However, the solubility is insufficient because hydrolysis does not occur, and thus the long-term antifouling effect is not sufficient.

Patent Document 2 discloses an antifouling coating material improved from that in Patent Document 1. The antifouling coating material includes a copolymer obtained by adding a polyoxyalkylene group to the copolymer in Patent Document 1. The solubility is enhanced by the addition of the polyoxyalkylene group to the copolymer of Patent Document 1. However, the copolymer dissolves without hydrolysis like Patent Document 1, and thus there is a problem that it is difficult to control both the long-term solubility of the resin and the physical properties (e.g. water resistance) of the resin.

Patent Documents 3 to 6 disclose hydrolyzable coating materials whose main component is metal-containing resin other than the aforementioned organic tin compound.

However, there is a problem that the rate of decrease of the coating film formed of these coating material easily changes depending on the environments (e.g. air temperature, water temperature, and so on), and thus is difficult to control.

Furthermore, Patent Document 7 to 10 discloses hydrolyzable coating materials which do not contain the aforementioned organic tin compound, and whose main component is an organosilyl group-containing resin. These coating materials exhibit an excellent antifouling performance, and have high water resistance in seawater, and therefore are widely used.

However, there is a problem that water contained in the raw materials of the coating materials or generated during manufacturing the coating material easily causes hydrolysis of the resin component during the storage, and thus causes thickening, gelation, and the like of the coating materials. Addition of a dehydrating agent has been proposed to solve the problem. However, although the dehydrating agent exhibits some effect, it does not solve the problem completely, and thus there's still some concern of thickening, gelation, and the like in the case of long-term storage. In addition, in handling the raw materials, caution to water is required, which deteriorates the work efficiency.

Thus, there has been desired development of a new antifouling coating material which can be used to form an antifouling coating film excellent in long-term antifouling performance and physical properties, and which is excellent in long-term storage stability.

### PRIOR ART REFERENCE

### PATENT DOCUMENT

Patent Document 1: JP-B-Sho 63-61989
Patent Document 2: JP-A-2003-119419
Patent Document 3 JP-B-Hei 7-64985
Patent Document 4: JP-A-Hei 4-80205
Patent Document 5: JP-A-Hei 4-80269
Patent Document 6: JP-A-Hei 4-80270
Patent Document 7: International Publication No.84/02195 pamphlet
Patent Document 8: EP1127902
Patent Document 9: JP-A-Hei 7-102193
Patent Document 10: JP-A-Hei 10-30071

### SUMMARY OF THE INVENTION

### PROBLEMS TO BE SOLVED BY THE INVENTIONS

The present invention provides an antifouling coating material which can be used to form an antifouling coating film excellent in long-term antifouling performance and physical properties, and which is excellent in long-term storage stability.

### MEANS FOR SOLVING THE PROBLEMS

The present inventors have made intensive research to solve the above-mentioned problem and found out that the composition containing a particular polymer can solve the above-mentioned problem, to complete the present invention.

The present invention relate to the following antifouling coating composition, an antifouling coating film formed by use of the composition, a coated object having the coating film thereon, and a method of antifouling treatment by forming the coating film.
1. An antifouling coating composition containing a copolymer [A] obtained by copolymerizing a monomer represented by a general formula (1):

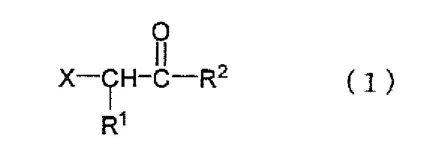

wherein, X represents acryloyloxy, methacryloyloxy, crotonoyloxy, or isocrotonoyloxy, R¹ represents a hydrogen atom or methyl, and R² represents an alkyl group having a carbon number of 1 to 6;
and a polymerizable monomer represented by a general formula (2)

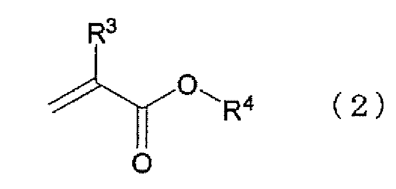

wherein, R³ represents a hydrogen atom or methyl, R⁴ represents an alkyl group having a carbon number of 1 to 10, or an alkyl group having a carbon number of 2 to 5 to which an alkoxy group having a carbon number of 1 to 4 is bonded.
2. The antifouling coating composition of the above item 1, wherein when R² in the general formula (1) is an alkyl group having a carbon number of 1 or 2, R⁴ in the general formula (2) is a branched alkyl group having a carbon number of 3 to 10.
3. The antifouling coating composition of the above item 2, wherein when R² in the general formula (1) is an alkyl group having a carbon number of 1 or 2, the polymerizable monomer (2) is isobutyl acrylate or isobutyl methacrylate.
4. The antifouling coating composition of the above item 1, wherein when R² in the general formula (1) is an alkyl group having a carbon number of 3 to 6, the alkyl group is a branched alkyl group.
5. The antifouling coating composition of any one of the above items 1 to 4, wherein the usage amount of the monomer (1) is 10 to 80 weight% with respect to the total weight of the monomers.
6. The antifouling coating composition of any one of the above items 1 to 5, wherein the usage amount of the monomer (2) is 20 to 90 weight% with respect to the total weight of the monomers.
7. The antifouling coating composition of any one of the above items 1 to 6, further containing an antifoulant [B].
8. The antifouling coating composition of the above item 7, wherein the antifoulant [B] is cuprous oxide.
9. The antifouling coating composition of any one of the above items 1 to 8, further containing a release modifier [C].
10. The antifouling coating composition of the above item 9, wherein the release modifier [C] is at least one kind selected from the group consisting of a rosin, a rosin derivative and a metal salt thereof.
11. The antifouling coating composition of any one of the above items 1 to 10, further containing a plasticizer [D].
12. A method of antifouling treatment comprising the step of forming an antifouling coating film on the surface of an object to be coated using the antifouling coating composition of any one of the above items 1 to 11.
13. An antifouling coating film formed by using the antifouling coating composition recited in any one of the above items 1 to 11.
14. A coated object having the antifouling coating film of the above item 13 on the surface thereof.

### EFFECT OF THE INVENTION

The antifouling coating composition of the present invention is excellent in long-term storability. Therefore, the composition of the present invention is not thickened, gelated, or solidified even after long-term storage.

The antifouling coating film formed by use of the antifouling coating composition of the present invention has a suitable solubility. Therefore, the coated object having the coating film on the surface thereon can maintain the antifouling performance for a long time. In particular, when the antifouling coating film of the present invention is formed on a ship bottom, aquatic fouling organisms hardly attach or accumulate even during anchorage, rigging, or like a resting state, and thus the long-term antifouling effect is exhibited. This reduces the frictional resistance of the ships, and reduces the fuel cost while sailing

Furthermore, the antifouling coating film on the surface is basically free from coating film defects even after a long period of time. For this reason, after using the coated object for a predetermined period, a new antifouling coating film can be desirably formed by directly recoating the antifouling coating film composition thereon. This makes it possible to continuously maintain the antifouling effect in a simple and inexpensive manner.

### EMBODIMENT FOR CARRYING OUT THE INVENTION

Hereinafter, the present invention will be explained in detail.

### Antifouling Coating Composition

The antifouling coating composition of the present invention contains a copolymer [A] obtained by copolymerizing a monomer (hereinafter also referred to as "monomer (1)") represented by a general formula (1):

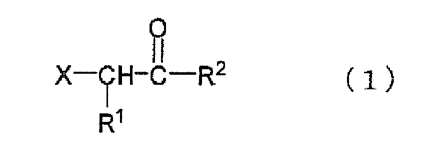

wherein, X represents acryloyloxy, methacryloyloxy, crotonoyloxy, or isocrotonoyloxy, R¹ represents a hydrogen atom or methyl, and R² represents an alkyl group having a carbon number of 1 to 6;
and a polymerizable monomer (hereinafter also referred to as "monomer (2)") represented by a general formula (2):

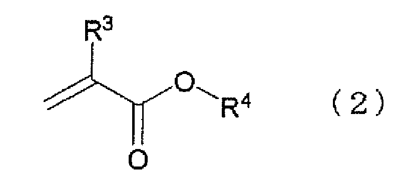

wherein, R³ represents a hydrogen atom or methyl, R⁴ represents an alkyl group having a carbon number of 1 to 10, or an alkyl group having a carbon number of 2 to 5 to which an alkoxy group having a carbon number of 1 to 4 is connected.

### < Copolymer [A] >

Like the aforementioned coating films containing the organic tin-containing resin or the organosilyl group-containing resin, the coating film containing the copolymer [A] allows the copolymer [A] to be hydrolyzed and released into seawater, and thus the coating film is renewed while exhibiting a self-polishing effect, and release the antifoulant in the coating film. As a result, the coating film formed by use of the composition of the present invention can exhibit the antifouling performance.

The copolymer [A] is formed by copolymerizing the monomer (1) and the monomer (2). The monomer (1) has the following structure.

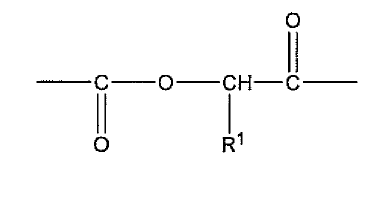

The aforementioned structure includes an ester bond, and the ester bond provides a suitable hydrolyzability. Therfore, the polymer obtained by polymerizing the monomer (1) having the aforementioned structure is hydrolyzed at a suitable speed in seawater, and gradually dissolves therein, and thus exhibits long-term excellent antifouling performance.

In acidic to neutral conditions, the hydrolysis rate of the monomer (1) is, lower than an organosilyl group-containing (meth)acrylate or like monomer, but in an alkaline condition which is more alkaline than weak alkaline condition (pH 8 to 9), the hydrolysis rate of the monomer (1) is close to that of an organosilyl (meth)acrylate.

This characteristic nature of the monomer (1) exists in the polymer obtained by polymerizing the monomer. Because the polymer has smaller hydrolyzability than organosilyl (meth)acrylate or the like in acidic to neutral conditions, the polymer is more difficult to be hydrolyzed when water is mixed in during manufacturing or storing the antifouling coating material. Therfore, the coating composition containing the aforementioned polymer exhibits high storage stability even when a component for removing water is not contained. This is in contrast to the coating composition using an organosilyl group-containing (meth)acrylate or the like which requires a component for removing water (dehydrating agents etc.) to enhance the storage stability.

Then, the aforementioned polymer exhibits a suitable hydrolysis rate in seawater which is in an alkaline condition which is more alkaline than weak alkaline condition (pH 8 to 9), and thus the coating film can be renewed for a long time. Because this polymer is hydrolyzable, and thus the solubility of the coating film is stable for a long time. Therefore, antifouling performance and proper coating film state due to the stable renewal can be maintained for a long time.

However, the polymer containing the monomer (1) tends to have low solubility to a common solvent for a coating material, such as an aromatic solvent, an ester-based solvent, a ketone-based solvent, or the like.

In particular, the polymer tends to have lower solubility to xylene which is a most commonly used solvent for an antifouling coating composition than an ester-based solvent and a ketone-based solvent

Then, in order to improve the solubility, of the polymer containing the monomer (1), to a solvent, the copolymer [A] includes, as an essential component, a polymerizable monomer other than the monomer (1), represented by a general formula (2):

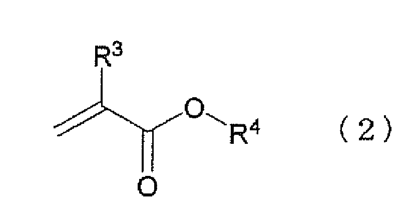

wherein, R³ represents a hydrogen atom or methyl, R⁴ represents an alkyl group having a carbon number of 1 to 10, or an alkyl group having a carbon number of 2 to 5 to which an alkoxy group having a carbon number of 1 to 4 is bonded.

When a monomer other than the monomer (2) is used as a monomer to copolymerize with the monomer (1), the obtained copolymer is difficult to exhibit long-term antifouling performance while achieving a sufficient level of solubility to a solvent, solubility of the coating film, and property of the coating film.

For example, when styrene, which is one of general-purpose polymerizable monomers, is used as a polymerizable monomer, the obtained copolymer has better solubility to a solvent than the polymer obtained only from the monomer (1). However, the coating film formed of the coating composition containing the copolymer has such problems that the coating film has low solubility, tends to cause cracks, or the like, and thus is difficult to have long-term antifouling performance.

Furthermore, the polymer obtained by use of other common polymerizable monomers is difficult to exhibit long-term antifouling performance while achieving a sufficient level of solubility to a solvent, solubility of the coating film, and property of the coating film. Therefore, the monomer (2) is used as a copolymerization monomer component of the copolymer [A] in order to solve the aforementioned problem and exhibit long-term antifouling performance.

The monomer (1) is now explained in detail.

X in the general formula (I) represents acryloyloxy, methacryloyloxy, crotonoyloxy or isocrotonoyloxy.

In particular, it is preferable that X in the general formula (I) is acryloyloxy in view of the solubility of the coating film.

R¹ in the general formula (I) represents a hydrogen atom or methyl. The hydrolysis rate tends to be faster when R¹ is a hydrogen atom than when R¹ is methyl. Therefore, it is preferable that R¹ is a hydrogen atom in view of the hydrolyzability.

R² in the general formula (I) represents an alkyl group having a carbon number of 1 to 6.

As the carbon number of R² of the monomer (1) increases, the solubility of the copolymer to a solvent improves. However, when the carbon chain is too long, the coating film hardness deteriorates. This can result in the deterioration of the coating film property such as generation of blister, cold flow, and the like. Therefore, in view of the solubility of the copolymer to a solvent and the coating film property, R² in the monomer (1) employs an alkyl group having a carbon number of 1 to 6.

Examples of the alkyl group having a carbon number of 1 to 6 represented by R² in the general formula (1) include methyl, ethyl, propyl, isopropyl, butyl, isobutyl, sec-butyl, tert-butyl, pentyl, isopentyl, 2-methylbutyl, 1,2-dimethylpropyl, n-hexyl, 1-ethylbutyl, 2-ethylbutyl, 1,2-dimethylbutyl.

Here, when the carbon number of R² is as small as 1 or 2, the compatibility with a solvent tends to be low. In order to improve this, when R² is methyl or ethyl, it is preferable to use a copolymerization monomer (2) whose R⁴ in the general formula (2) is a branched alkyl group having a carbon number of 3 to 10.

When the carbon number of the alkyl group represented by R² in the general formula (1) is 3 to 6, the alkyl group is preferred to be a branched alkyl group. The solubility of the polymer to a solvent is better when R² is a branched alkyl group than when R² is an unbranched alkyl group, and thus the solubility to a solvent, in particular, to a solvent containing xylene in an amount of 70 to 100% improves and the coating film property such as coating film strength improves.

The usage amount of the monomer (1) is preferably 10 to 80 weight% and more preferably 20 to 60 weight% with respect to the total weight of the monomers in view of the enhancement of the compatibility of the copolymer [A] to a solvent or the like, suitable hydrolyzability of the coating film, suitable coating film properties, or the like.

In the present invention, preferable examples of the monomer (1) are as follows.

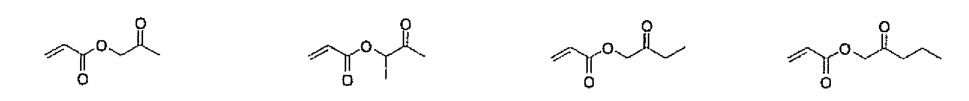

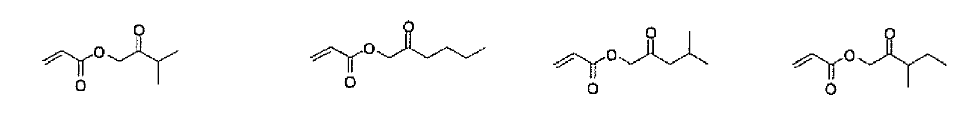

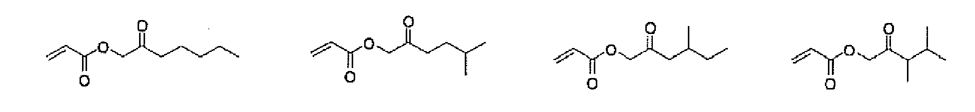

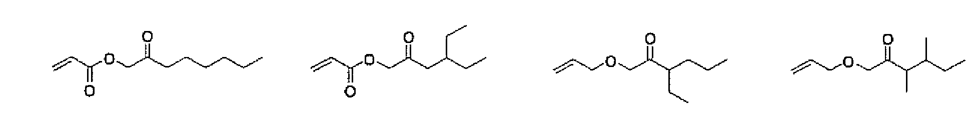

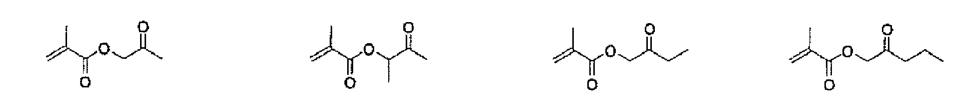

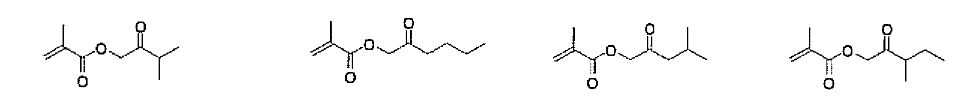

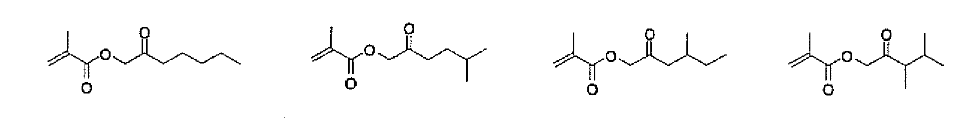

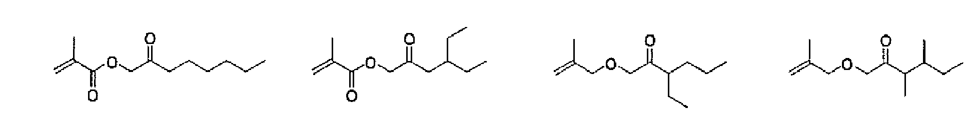

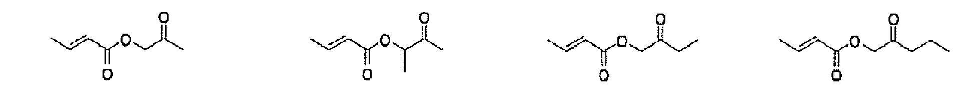

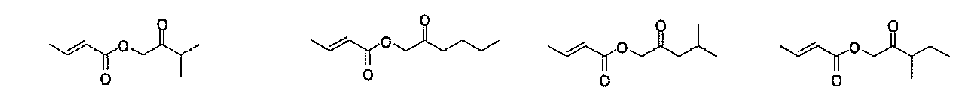

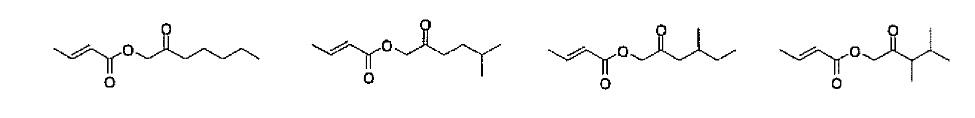

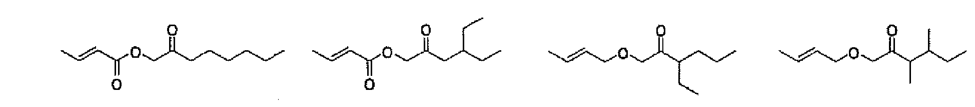

For the monomer (1), one kind can be used singly or two or more kinds can be used in combination. When two or more kinds of the monomers (1) are used in combination, the solubility of the coating film and the other coating film properties can be adjusted more appropriately.

### (Manufacturing of Monomer (1)

The monomer (1) can be manufactured, for example, from α-haloketone and an unsaturated carboxylic acid or the metal salt thereof. Specific manufacturing methods include a method of reacting an alkali metal salt aqueous solution of an unsaturated carboxylic acid, such as sodium methacrylate salt prepared from methyl methacrylate, with α-haloketone (ketone whose carbonyl group is substituted with a halogen element on the α-position) such as chloroacetone (U.S. Patent No. 2376033), and a method of reacting, in the presence of triethylamine, an unsaturated carboxylic acid such as methacrylic acid with α-haloketone such as chloroacetone (Journal of Polymer Science:Part A:Polymer Chemistry, Vol. 26 2295-2303(1988)).

The monomer (2) is explained in more detail.

R³ in the general formula (2) represents a hydrogen atom or methyl.

Examples of the alkyl group having a carbon number of 1 to 10 represented by R⁴ in the general formula (2) include methyl, ethyl, propyl, isopropyl, butyl, isobutyl, sec-butyl, tert-butyl, pentyl, isopentyl, hexyl, cyclohexyl, heptyl, octyl, 2-ethylhexyl, nonyl, decyl. Examples of the alkyl group having a carbon number of 2 to 5 to which an alkoxy group having a carbon number of 1 to 4 include 2-methoxyethyl, 2-ethoxyethyl, 3-methoxypropyl, 3-ethoxypropyl, 4-methoxybutyl.

Examples of the monomer (2) include methyl (meth)acrylate, ethyl (meth)acrylate, n-propyl (meth)acrylate, isopropyl (meth)acrylate, n-butyl (meth)acrylate, isobutyl (meth)acrylate, pentyl (meth)acrylate, isopentyl (meth)acrylate, n-hexyl (meth)acrylate, cyclohexyl (meth)acrylate, n-octyl (meth)acrylate, 2-ethylhexyl (meth)acrylate, n-nonyl (meth)acrylate, 2-methoxyethyl (meth)acrylate, 2-ethoxyethyl (meth)acrylate, 3-methoxypropyl (meth)acrylate, 4-methoxybutyl (meth)acrylate.

Here, when R² is an alkyl group having a carbon number of 1 or 2, it is preferable to use the monomer whose R⁴ is a branched alkyl. As the monomer (2) whose R⁴ is a branched alkyl, isobutyl acrylate or isobutyl methacrylate is preferred. When R² of the monomer (1) is an alkyl group having a carbon number of 1 or 2, the solubility to xylene or like an aromatic solvent tends to be low. By use of the monomer (2) whose R⁴ has branched structure, the solubility to a solvent, in particular, a solvent containing xylene in an amount of 70 to 100% is effectively improved.

The monomer (2), as necessary, can be used singly or in combination of two or more kinds. When two or more kinds are combined, the compatibility with a solvent or the like and the coating film property can be adjusted more appropriately.

The usage amount of the monomer (2) is preferably 20 to 90 weight% and more preferably 30 to 70 weight% with respect to the total weight of the monomers in view of the enhancement of the compatibility of the copolymer [A] to a solvent or the like, suitable hydrolyzability the coating film, suitable coating film properties, or the like.

As monomer components of the copolymer [A], another monomer (3) other than the monomer (1) and the monomer (2) can be used.

Examples of the other monomer (3) include phenyl (meth)acrylate, tolyl (meth)acrylate, xylyl (meth)acrylate and like aryl (meth)acrylate monomers; benzyl (meth)acrylate, phenethyl (meth)acrylate and like aralkyl (meth)acrylate monomers; styrene, α-methyl styrene, vinyl toluene and like vinyl group-containing aromatic monomers; dimethyl malate, diethyl malate and like maleic acid diester monomers; 2-hydroxyethyl (meth)acrylate, 2-hydroxypropyl (meth)acrylate, 3-hydroxypropyl (meth)acrylate, 3-hydroxybutyl (meth)acrylate, 4-hydroxybutyl (meth)acrylate and like hydroxyalkyl (meth)acrylate monomers; 2-aminoethyl (meth)acrylate, 3-aminopropyl (meth)acrylate, 2-N,N-dimethylaminoethyl (meth)acrylate, 2-N,N-diethylaminoethyl (meth)acrylate, 3-N,N-dimethylaminopropyl (meth)acrylate, 3-N,N-diethylaminopropyl (meth)acrylate and like amino group-containing alkyl (meth)acrylate monomers; N-(2-aminoethyl) (meth)acrylamide, N-(3-aminopropyl) (meth)acrylamide, N-[2-(dimethylamino)ethyl] (meth)acrylamide, N-[3-(dimethylamino)propyl] (meth)acrylamide and like (meth)acrylamide-based monomers; vinyl acetate, vinyl benzoate and like vinyl ester monomers; trialkylsilyl (meth)acrylate and like various kinds of monomers each containing a silyl ester group.

When the monomer (3) is used, the usage amount of the monomer (3) is preferably 0.5 to 40 weight% and more preferably 1 to 20 weight% with respect to the total weight of the monomers.

The weight-average molecular weight (Mw) of the copolymer [A] is preferably 1,500 to 200,000, and more preferably 5,000 to 100,000.

The method of manufacturing the copolymer [A] of the present invention is not in particular limited, but one example is a method of mixing the monomer (1) and the monomer (2) and polymerizing the mixture in the presence of an polymerization initiator at about 60 to 180 deg. C.

Examples of the aforementioned polymerization initiator include benzoyl peroxide, t-butyl peroxide benzoate and like peroxide-based radical polymerization initiators, azobisisobutyronitrile and like azo-based radical polymerization initiators. These can be used singly or in combination of two or more kinds.

Examples of the polymerization method to manufacture the copolymer [A] include solution polymerization, suspension polymerization, emulsion polymerization and the like. Among these, solution polymerization using a common organic solvent is preferable because of the versatility.

Examples of the solvent used' for the aforementioned solution polymerization include toluene, xylene and like aromatic hydrocarbon-based solvents, n-butyl acetate and like ester-based solvents, methyl isobutyl ketone and like ketone-based solvents. As the solvent, xylene is in particular preferably because of its versatility as a solvent for an antifouling coating composition. These solvent can be used singly or in combination of two or more kinds.

The amount of the copolymer [A] in the antifouling coating composition of the present invention is not limited, but is usually 3 to 50 weight%, and preferably 5 to 30 weight% with respect to the solid content of the antifouling coating composition.

The antifouling coating composition of the present invention may further contain, as necessary, an antifoulant [B], a release modifier [C], a plasticizer [D] and the like in addition to the copolymer [A]. The addition can improve the antifouling effect.

### < Antifoulant [B] >

The antifoulant [B] may be any substance as long as it has a killing or repelling effect against aquatic fouling organisms. Examples of the antifoulant [B] include cuprous oxide, copper rhodanide, copper powder, 2-mercaptopyridine-N-oxide copper and like copper compounds; 2-mercaptopyridine-N-oxide zinc, bis(dimethyldithiocarbamoyl) zinc ethylene bis(dithiocarbamate), zinc dimethyldithiocarbamate and like zinc compounds; 2,4,5,6-tetrachloroisophthalonitrile, 3,4-dichlorophenyl dimethyl urea, 4,5-dichloro-2-N-octyl-3-(2H)-isothiazoline, N,N-dimethyl-N'-phenyl-(N-fluorodichloromethylthio)sulfamide, tetramethylthiuram disulfide, tetraethylthiuram disulfide, 3-iodo-2-propynyl butylcarbamate, pyridine triphenyl borane, 2-(methoxycarbonylamino)-benzimidazole and like compounds not containing metals. These can be used singly or in combination of two or more kinds. In particular, as the antifoulant [B], cuprous oxide is preferable because it provides excellent antifouling effect.

The amount of the antifoulant [B] in the composition of the present invention is not in particular limited, but it is usually 0.1 to 75 weight%, and preferably 1 to 60 weight% with respect to the solid content of the composition of the present invention. When the amount of the antifoulant [B] is less than 0.1 weight%, sufficient antifouling effect might not be obtained. When the amount of the antifoulant [B] is over 75 weight%, the obtained coating film is fragile, and adherence of the coating film to the coated object is weak, and thus the coating film does not sufficiently exhibit the function as an antifouling coating film.

### < Release Modifier [C] >

Examples of the release modifier [C] include a rosin, a rosin derivative and a metal salt thereof, or a monocarboxylic acid and a salt thereof, and the like.

Examples of the rosin includes tall oil rosin, gum rosin, wood rosin, and the like. Examples of the rosin derivative include hydrogenated rosin, maleinized rosin, formylated rosin, polymerization rosin, and the like. For the metal salt of the rosin and the metal salt of the rosin derivative, the product obtained by the reaction of a metal compound and the rosin can be used. Examples of the metal salt include zinc rosinate, calcium rosinate, copper rosinate, magnesium rosinate, and the like.

Examples of the monocarboxylic acid include a fatty acid, a synthetic fatty acid, naphthenic acid, and the like, each of which having a carbon number of 5 to 30. Examples of the salt of the monocarboxylic acid include copper salt, zinc salts, magnesium salt, calcium salt, and the like.

In particular, the composition of the present invention preferably includes, as the release modifier [C], at least one kind selected from the group consisting of a rosin, a rosin derivative and a metal salt thereof in that a suitable releasing property is given to the composition of the present invention.

The amount of the release modifier [C] in the composition of the present invention is usually 1 to 80 parts by weight, preferably 10 to 50 parts by weight with respect to 100 parts by weight of the copolymer [A]. When the release modifier [C] is less than 1 part by weight, the effect of preventing attachment of aquatic fouling organisms, in particular, during rigging cannot be expected. When the amount of the release modifier [C] is over 80 parts by weight, defects such as cracks, peeling, and the like tend to occur, and thus the effect of preventing attachment of aquatic fouling organisms might not be sufficiently exhibited.

### < Plasticizer [D] >

By adding the plasticizer [D] in the antifouling coating composition of the present invention, it is possible to improve the plasticity of the compound, and as a result it is possible to suitably form a strong coating film.

Examples of the plasticizer [D] include tricresyl phosphate, trioctyl phosphate, dioctyl phthalate, chlorinated paraffin, liquid paraffin, ethyl vinyl ether polymer, polybutene, and the like. These can be used singly or in combination of two or more kinds.

The amount of the plasticizer [D] in the composition of the present invention is usually 0.1 to 20 parts by weight, preferably 0.5 to 10 parts by weight with respect to 100 parts by weight of the copolymer [A].

### < Other Additives >

Furthermore, the antifouling coating composition of the present invention, if necessary, may include a pigment, a dye, an antifoaming agent, an anti-sagging agent, a dispersant, an antisettling agent, a dehydrating agent, an organic solvent, and the like.

Example of the pigment include zinc oxide, red iron oxide, talc, titanium oxide, silica, calcium carbonate, barium sulfate, oxidation calcium, oxidation magnesium, and the like. These can be used singly or in combination of two or more kinds.

Examples of the dye include various kinds of organic dyes soluble to an organic solvent.

Examples of the antifoaming agent include a silicone resin-based antifoaming agent, an acryl resin-based antifoaming agent, and the like.

Examples of the anti-sagging agent, the dispersant or the antisettling agent include fatty acid amide wax, oxidized polyethylene, and the like.

In the coating composition of the present invention, a dehydrating agent to suppress hydrolysis is not necessary because the aforementioned copolymer [A] has high stability against water. However, a dehydrating agent may be used to remove surplus water in the coating material.

Examples of the dehydrating agent include anhydrous gypsum, synthetic zeolite-based adsorbent, orthoesters, tetraethoxysilane and like silicates, and isocyanates. These can be used singly or in combination of two or more kinds.

Examples of the organic solvent include an aliphatic solvent, an aromatic solvent, a ketone-based solvent, an ester-based solvent, an ether-based solvent, and like a solvent which is usually used in the antifouling coating material. These can be used singly or in combination of two or more kinds.

### Method of Production of Antifouling Coating Composition

The antifouling coating composition of the invention can be manufactured, for example, by mixing and dispersing a mixed solution containing the copolymer [A] and the like by use of a disperser.

The amounts of the copolymer [A] and the like may be suitably adjusted so that the resulting antifouling coating composition contains the copolymer [A] and the like as described above.

The mixed solution is preferably obtained by dissolving or dispersing various materials such as the copolymer [A] in a solvent. As the solvent, the aforementioned organic solvent may be used.

For the disperser, for example, the one which can be used as a micro-pulverizer can be suitably used. For example, a commercially available homo mixer, sand mill, bead mill, or the like can be used. Furthermore, the mixed solution can be mixed and dispersed by use of a container with a stirrer to which glass beads for mixing and dispersing are added.

### Method of Antifouling Treatment, Antifouling Coating Filmg and Coated Object

The method of antifouling treatment of the invention are characterized in that an antifouling coating film is formed on the surface of the object to be coated using the above-explained antifouling coating composition. The method of antifouling treatment of the present invention can prevent adhesion of aquatic fouling organisms by the gradual dissolution of the surface of the antifouling coating film, so as to continually renew the surface of the coating film. After the dissolution of the coating film, the antifouling effect can be continuously exhibited by recoating the composition.

Examples of objects on which a coating film can be formed include ships (in particular, ship bottoms), fishing tools, structures submerged in seawater, etc. Examples of the fishing tools include fishing nets for use in aquaculture or in fixed netting, and fishing net accessories such as floats attached to fishing nets, ropes, etc. Examples of structures submerged in seawater include power plant aqueducts, bridges, port facilities, etc.

The antifouling coating film of the present invention can be formed by applying the antifouling coating composition to the surface (entirely or partially) of the object on which a coating film is formed.

Examples of the coating method include brush coating, spray coating, dipping, flow coating, spin coating, etc. These coating methods may be employed singly or in combination of two or more kinds.

The coating composition is dried after application. The drying temperature may be room temperature. The drying time may be suitably selected depending on the thickness of the coating film, etc.

The thickness of the antifouling coating film may be suitably selected depending on the type of object on which a coating film is formed, the navigation speed of the ship, the seawater temperature, etc. For example, when the object on which a coating film is formed is a ship bottom, the thickness of the antifouling coating film is generally 50 to 500 µm, and preferably 100 to 400 µm.

The coated object of the present invention has the antifouling coating film on its surface. The coated object of the present invention may have the antifouling coating film on the entire surface thereof, or a part thereof.

The coated object of the present invention can exhibit the antifouling effect continuously. Therefore, it can be desirably applied to ships (in particular, ship bottoms), fishing tools, structures submerged in seawater, etc.

For example, when the antifouling coating film is formed on the surface of a ship bottom, the antifouling coating film gradually dissolves from the surface, so that the coating film surface is always renewed. This prevents the adhesion of aquatic fouling organisms.

Furthermore, the hydrolysis rate of the antifouling coating film in seawater is desirably controlled. Therefore, ships benefit from the antifouling effect for a long period of time; additionally, even when the ships are not moving, for example, during anchorage, rigging, etc., the adhesion and accumulation of aquatic fouling organisms is barely observed, and the antifouling effect is exhibited for a long time.

The surface of the antifouling coating film is basically free from cracking or peeling even after a long period of time. Therefore, it is unnecessary to completely removing the existing coating film before re-forming a new coating film. Therefore, by directly recoating the antifouling coating film composition thereon, the antifouling coating film can be effectively formed. This makes it possible to continuously maintain the antifouling effect easily and at low cost.

Features of the invention will be further clarified referring to the Examples, etc. shown below; however, the invention is not limited by the Examples. In Examples, "parts" denotes "parts by weight" unless specified otherwise. The molecular weight (Mw) is a weight-average molecular weight determined by gel permeation chromatography (GPC) (using a polystyrene standard).

GPC was performed under the following conditions.
Equipment: HLC-8220 GPC; Tosoh Corporation
Column: TSK-gel Super HZM-M. two
Flow rate: 0.35 mL/min
Detector: RI
Column thermostat temperature: 40 deg. C
Eluate: THF

The non-volatile content is weight% of the copolymer [A] after heating for one hour at 125 deg. C with respect to the weight of the copolymer [A] before heating.

### Production Example 1 Production of Copolymer [A-1])

A solvent (xylene) (100 parts) was charged to a reaction container equipped with a thermometer, a reflux condenser, a stirrer, and a dropping funnel, after which a mixture of a monomer shown in Table 1 (1-1) (45 parts), methyl methacrylate (2-1) (30 parts), 2-methoxyethyl acrylate (2-4) (25 parts), and polymerization initiator azobisisobutyronitrile (1) (0.9 parts) was added dropwise into the container while stirring at 110 to 115 deg. C in a nitrogen atmosphere. After the dropwise addition, azobisisobutyronitrile (2) (0.5 parts) was added to the resulting reaction solution, and thereafter the reaction was carried out for 4 hours at 110 deg. C while stirring, to obtain a copolymer [A-1]. Table 2 shows the weight-average molecular weight (Mw), the non-volatile content of the [A-1].

### Production Examples 2 to 17 (Production of Copolymers [A-2] to [A-17]

By use of a monomer shown in Table 1 and the followings, a solvent shown in Table 2, and a polymerization initiator, polymerization reaction is carried out by the same procedures as in Production Example 1, to obtain copolymers [A-2] to [A-17]. Table 2 shows the Mw, and the non-volatile content.
2-1··· methyl methacrylate
2-2··· n-butyl acrylate
2-3··· isobutyl methacrylate
2-4···2-methoxyethyl acrylate
2-5···2-methoxyethyl methacrylate
3-1··· styrene

**Table 1**

**Table 1**

| | | | |
|---|---|---|---|
| Monomer(1-1) | 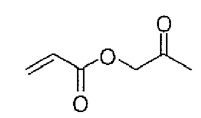 | Monomer(1-7) | 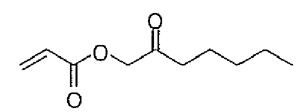 |
| Monomer(1-2) | 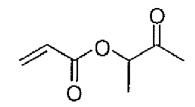 | Monomer(1-8) | 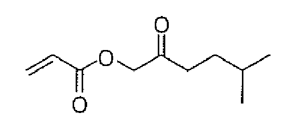 |
| Monomer(1-3) | 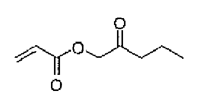 | Monomer(1-9) | 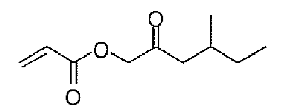 |
| Monomer(1-4) | 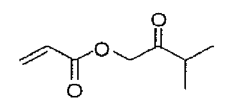 | Monomer(1-10) | 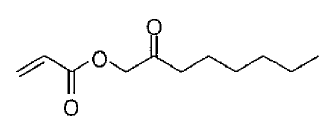 |
| Monomer(1-5) | 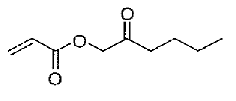 | Monomer(1-11) | 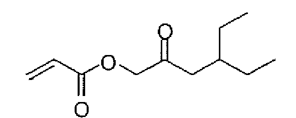 |
| Monome(1-6) | 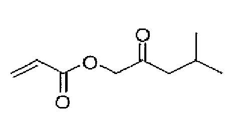 | Monomer(1-12) | 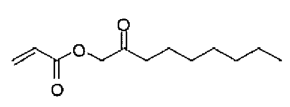 |

**Table 2**

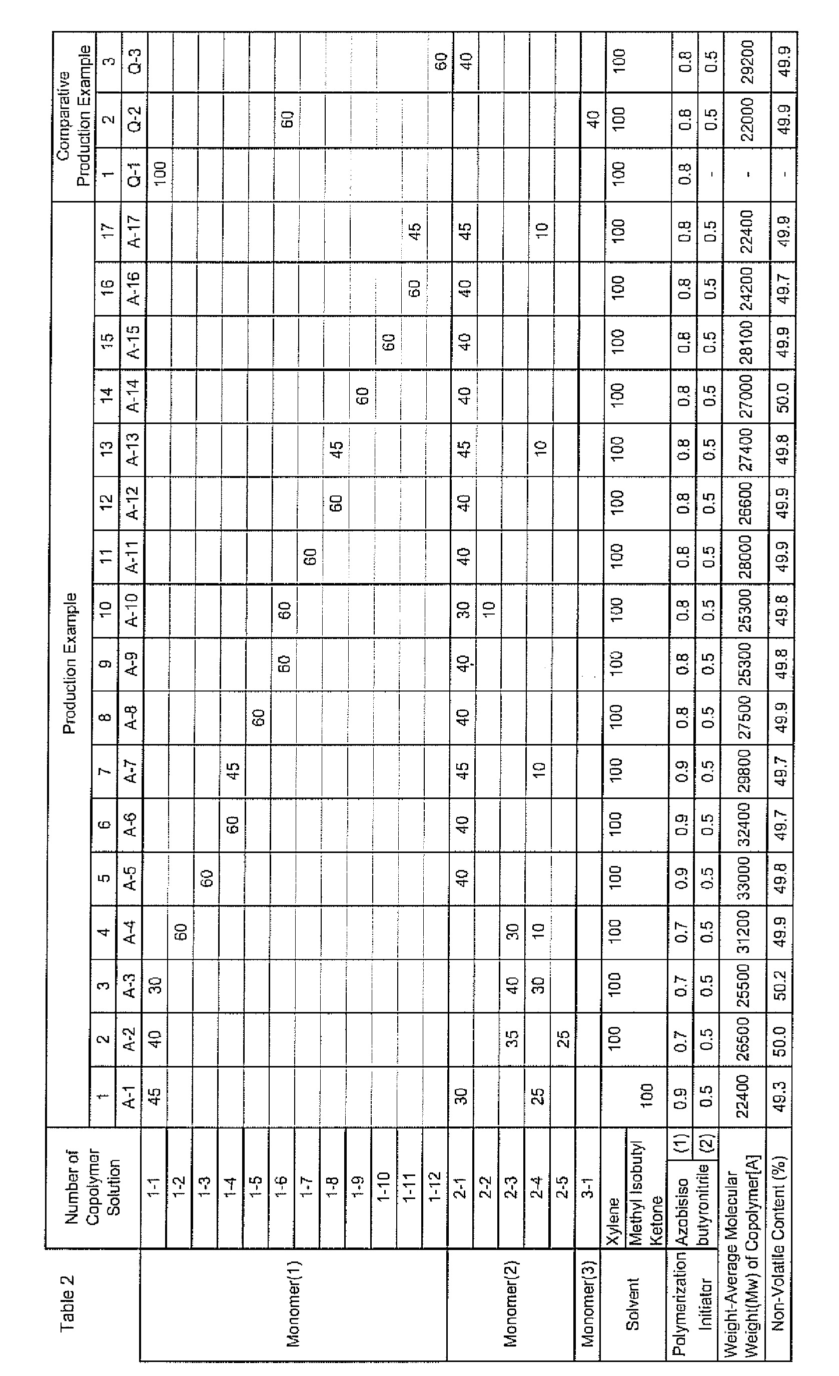

### Examples 1 to 18 (Production of Coating Compositions)

As the copolymer [A], the copolymers [A-1] to [A-17] obtained in Production Examples 1 to 17 were added to containers in the ratio (weight%) shown in Table 3. As the antifoulant [B], the release modifier [C], the plasticizer [D], the pigment, the anti-sagging agent and the solvent, the antifoulant, the release modifier, the plasticizer, the pigment, the anti-sagging agent and the solvent shown in Table 3 were added thereto in the ratio (weight%) shown in Table 3, thereafter glass beads with a diameter of 1.5 to 2.5 mm were added thereto for mixing and dispersing, and the resultant mixture was stirred, mixed, and dispersed by use of a stirrer for experiment, to prepare a coating film composition. In Table 3, cuprous oxide is the trade name "NC-301" manufactured by Nissin Chemco, Ltd., polyvinyl ether is the trade name "Lutonal A-25" manufactured by BASF, A630-20X is , trade name " Dispalon A630-20X" manufactured by Kusumoto Chemicals, Ltd. The release modifier [C] is a solution obtained by dissolving gum rosin in the same solvent as that used for manufacturing the copolymer [A] (the amount of gum rosin in the solution is 50 weight%).

**Table 3**

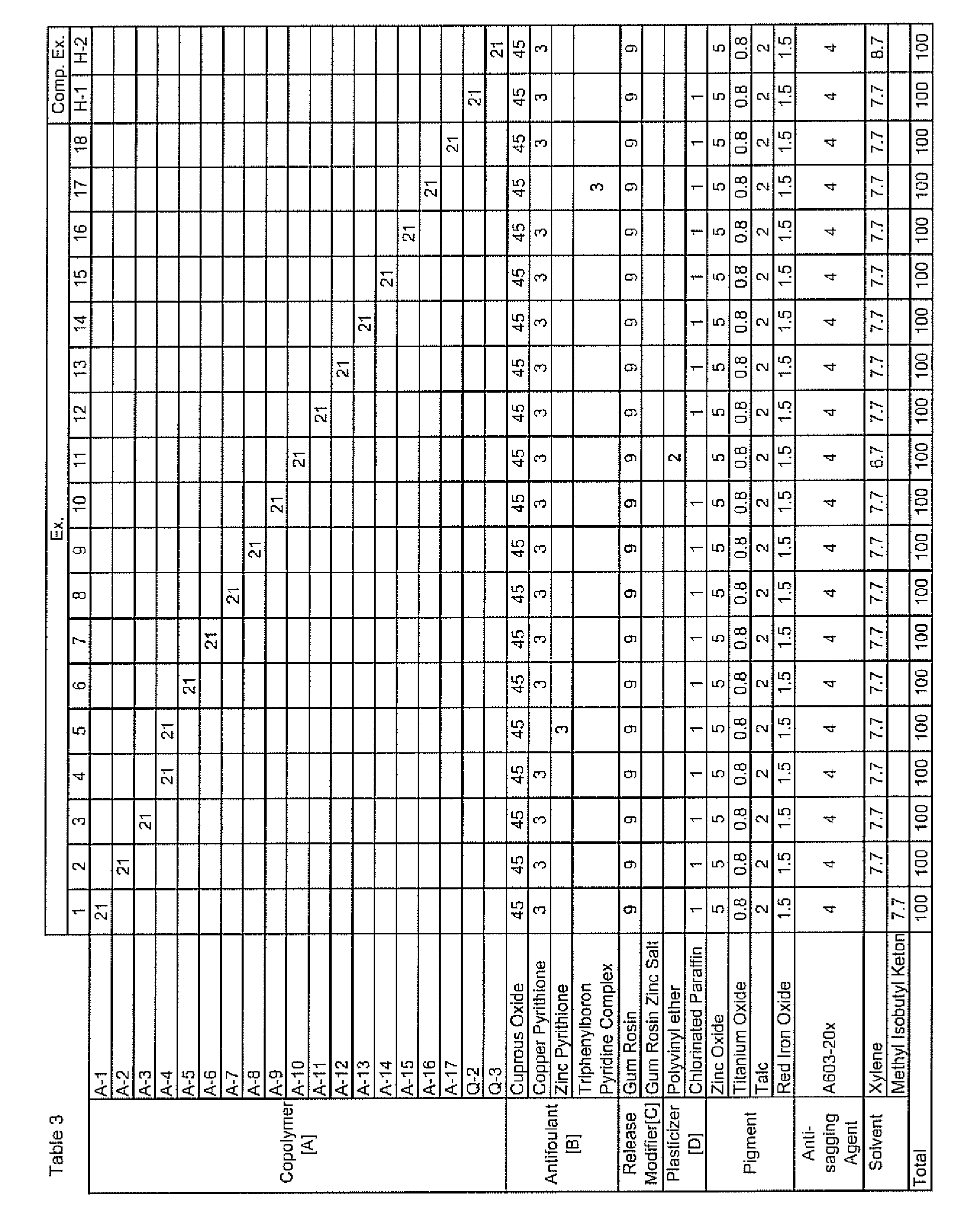

### Comparative Production Example 1 (Production of Copolymer [Q-1])

A solvent (xylene) (100 parts) was charged to a reaction container equipped with a thermometer, a reflux condenser, a stirrer, and a dropping funnel, after which a mixture of a monomer shown in Table 1 (1-1) (100 parts), and polymerization initiator azobisisobutyronitrile (1) (0.8 parts) was added dropwise into the container while stirring at 110 to 115 deg. C in a nitrogen atmosphere. Right after the dropwise addition, the reaction solution started to become turbid, and viscous material which appeared to be a polymer attached to the container, and thus an uniform polymer solution could not be obtained.

### Comparative Production Example 2 (Production of Copolymer [Q-2])

A solvent (xylene) (100 parts) was charged to a reaction container equipped with a thermometer, a reflux condenser, a stirrer, and a dropping funnel, after which a mixture of a monomer shown in Table 1 (1-6) (60 parts), styrene (3-1) (40 parts), and polymerization initiator azobisisobutyronitrile (1) (0.8 parts) was added dropwise into the container while stirring at 110 to 115 deg. C in a nitrogen atmosphere. After the dropwise addition, azobisisobutyronitrile (2) (0.5 parts) was added to the resulting reaction solution, and thereafter the reaction was carried out for 4 hours at 110 deg. C while stirring, to obtain a comparative copolymer [Q-2]. Table 2 shows the weight-average molecular weight (Mw), the non-volatile content of the [Q-2].

### Comparative Production Example 3 (Production of Copolymer [Q-3])

A solvent (xylene) (100 parts) was charged to a reaction container equipped with a thermometer, a reflux condenser, a stirrer, and a dropping funnel, after which a mixture of a monomer shown in Table 1 (1-12) (60 parts), methyl methacrylate (2-1) (40 parts), and polymerization initiator azobisisobutyronitrile (1) (0.8 parts) was added dropwise into the container while stirring at 110 to 115 deg. C in a nitrogen atmosphere. After the dropwise addition, azobisisobutyronitrile (2) (0.5 parts) was added to the resulting reaction solution, and thereafter the reaction was carried out for 4 hours at 110 deg. C while stirring, to obtain a comparative copolymer [Q-3]. Table 2 shows the weight-average molecular weight (Mw), the non-volatile content of the [Q-3].

### Comparative Production Example 4 (Production of Copolymer [Q-4])

A solvent (xylene) (300 parts) was charged to a reaction container equipped with a thermometer, a reflux condenser, a stirrer, and a dropping funnel, after which a mixture of methyl methacrylate (140 parts), ethyl acrylate (40 parts), triisopropylsilyl acrylate (220 parts) and benzoyl peroxide (1) (2 parts) was added dropwise into the container while stirring at about 100 deg. C in a nitrogen atmosphere. After the dropwise addition, benzoyl peroxide (2) (2 parts) was added to the resulting reaction solution, and thereafter the reaction was carried out for 4 hours at about 100 deg. C while stirring, to obtain a comparative copolymer [Q-4]. Table 4 shows the non-volatile content of the [Q-4].

**Table 4**

**Table 4**

| | | Comparative Production Example |
|---|---|---|
| | | 4 |
| Copolymer No. | | Q-4 |
| Solvent 1 | Xylene | 300 |
| | Butyl Acetate | |
| Monomer | Triisopropylsilyl Acrylate | 220 |
| | Methyl Methacrylate | 140 |
| | Ethyl Acrylate | 40 |
| Polymerization Initiator 1 | Benzoyl Peroxide | 2 |
| Polymerisation Initiator 2 | Benzoyl Peroxide | 2 |
| Solvent 2 | Xylene | 100 |
| Reaction Temperature (deg. C) | | 100 |
| Solid Content (%) | | 49.9 |

### Comparative Examples 1 and 2 (Production of Coating Compositions)

The copolymers [Q-2] and [Q-3], the antifoulant [B], the release modifier [C], the plasticizer [D], the pigment, the anti-sagging agent and the solvent were added to a container in the ratio (weight%) shown in Table 3, thereafter glass beads with a diameter of 1.5 to 2.5 mm were added thereto for mixing and dispersing, and the resultant mixture was stirred, mixed, and dispersed by use of a stirrer for experiment, to prepare comparative coating film compositions [H-1] and [H-2]. In Table 3, the release modifier [C] is a solution obtained by dissolving gum rosin in the same solvent as that used for manufacturing the comparative copolymer (the amount of gum rosin in the solution is 50 weight%).

### Comparative Examples 3 and 4 (Production of Coating Compositions)

The copolymer [Q-4] and components shown in Table 5 were added to a container in the ratio (weight%) shown in Table 5, thereafter glass beads with a diameter of 1.5 to 2.5 mm were added thereto for mixing and dispersing, and the resultant mixture was stirred, mixed, and dispersed by use of a stirrer for experiment, to prepare comparative coating film compositions [H-3] and [H-4].

**Table 5**

**Table 5**

| | Comp. Ex. | |
|---|---|---|
| | H-3 | H-4 |
| Comparative Copolymer Q-4 | 35 | 35 |
| Cuprous Oxide (Antifoulant) | 40 | 40 |
| Zinc Oxide (Pigment) | 5 | 5 |
| Red Iron Oxide (Pigment) | 2 | 2 |
| Talc (Pigment) | 3 | 3 |
| 2,4,5,5-Tetrachforoisophthalonitrife (Antifoulant) | 5 | 5 |
| Dispalon4300 (Dispersant) | 0.5 | 0.5 |
| Tetraethoxysilane (Dehydrating Agent) | 1 | 0 |
| Xylene (Solvent) | 10 | 10 |
| Total | 101.5 | 100.5 |

### Test Example 1 (Storage Stability Test)

Each of the coating compositions obtained in Examples 1 to 18 and Comparative Examples 1 to 4 was sealed in a 100 ml wide-mouth tin can and stored in an incubator at 50 deg. C for 2 month, after which the viscosity of the coating composition was measured. The viscosity was measured by use of a Brookfield viscometer at 25 deg. C.
The results are shown in Table 6.

**Table 6**

**Table 6**

| | | Storage Stability Test | | |
|---|---|---|---|---|
| | | Initial Viscosity (mPa·s) | Viscosity after Storage for 2 months at 50 deg. C | |
| | | | Viscosity (mPa·s) | Increase in Viscosity |
| Ex. | 1 | 820 | 850 | 30 |
| | 2 | 1750 | 1780 | 30 |
| | 3 | 1460 | 1480 | 20 |
| | 4 | 620 | 620 | 0 |
| | 5 | 600 | 600 | 0 |
| | 6 | 700 | 710 | 10 |
| | 7 | 720 | 720 | 0 |
| | 8 | 540 | 540 | 0 |
| | 9 | 610 | 620 | 10 |
| | 10 | 690 | 690 | 0 |
| | 11 | 640 | 640 | 0 |
| | 12 | 620 | 620 | 0 |
| | 13 | 570 | 560 | -10 |
| | 14 | 530 | 530 | 0 |
| | 15 | 560 | 570 | 10 |
| | 16 | 480 | 480 | 0 |
| | 17 | 570 | 580 | 10 |
| | 18 | 530 | 530 | 10 |
| Comp. Ex. | H-1 | 1920 | 1940 | 20 |
| | H-2 | 460 | 460 | 0 |
| | H-3 | 650 | 720 | 70 |
| | H-4 | 640 | Gelation | Gelation |

### Test Example 2 (Solubility Test for Coating Films)

A tank was provided, in the center thereof, with a rotating drum with a diameter of 318 mm and a height of 440 mm to allow the rotation of the drum via a motor. The tank was also provided with a heating apparatus and a cooling apparatus for keeping the seawater temperature constant, and a pH automatic controller for keeping the pH of the seawater constant.
Test plates were prepared according to the following method.
Each of the antifouling coating compositions obtained in Examples 1 to 18 and Comparative Examples 1 to 3 was applied to an anti-corrosive coating film on a hard vinyl chloride plate (75 x 150 x 1 mm) so that the thickness after drying would be about 100 µm. The applied coating was dried for 1 day at 40 deg. C, thus preparing a test plate having a dry coating film with a thickness of about 100 µm.
The thus-prepared test plate was secured to the rotating drum of the rotary apparatus of the above-mentioned equipment to contact the seawater, and the rotating drum was rotated at a speed of 37km/hr for 12 months. During the test, the seawater temperature was maintained at 25 deg. C and the pH at 8.0 to 8.2; the seawater was replaced once every week.
The initial coating film thickness and the remaining coating film thickness after every 3 months from the beginning of the test were measured for each test plate, using a microscope, and the thickness of the dissolved coating film was calculated from the difference therebetween to give the dissolving amount of the coating film.
The results are shown in Table 7.

**Table 7**

**Table 7**

| | | Solubility Test for Coating Films | | | | |
|---|---|---|---|---|---|---|
| | | Consumed Coating Film Thickness (µm) | | | | |
| | | 3 months | 6 months | 9 months | 12 months | Monthly Average Consumed Film Thickness after 12 Months |
| Ex. | 1 | 15 | 28 | 45 | 53 | 4.4 |
| | 2 | 13 | 26 | 43 | 60 | 5.0 |
| | 3 | 16 | 30 | 48 | 64 | 5.3 |
| | 4 | 11 | 20 | 29 | 35 | 2.9 |
| | 5 | 9 | 18 | 27 | 35 | 2.9 |
| | 6 | 12 | 20 | 30 | 40 | 3.3 |
| | 7 | 9 | 16 | 25 | 32 | 2.7 |
| | 8 | 8 | 16 | 26 | 35 | 2.9 |
| | 9 | 10 | 22 | 29 | 37 | 3.1 |
| | 10 | 11 | 20 | 32 | 43 | 3.6 |
| | 11 | 13 | 22 | 34 | 43 | 3.6 |
| | 12 | 17 | 30 | 43 | 52 | 4.3 |
| | 13 | 12 | 22 | 33 | 47 | 3.9 |
| | 14 | 14 | 26 | 38 | 48 | 4.0 |
| | 15 | 13 | 27 | 38 | 49 | 4.1 |
| | 16 | 18 | 33 | 46 | 60 | 5.0 |
| | 17 | 12 | 26 | 32 | 45 | 3.8 |
| | 18 | 10 | 22 | 30 | 40 | 3.3 |
| Comp. Ex. | H-1 | 6 | 10 | 9 | 10 | 0.8 |
| | H-2 | 20 | 35 | 45 | 48 | 4.0 |
| | H-3 | 14.0 | 35 | 45 | 62 | 5.2 |

### Test Example 3 (Antifouling Test)

Each of the coating compositions obtained in Examples 1 to 18 and Comparative Examples 1 to 3 was applied to both surfaces of a hard vinyl chloride plate (100 x 200 x 2 mm) so that the dry coating film thickness would be about 200 µm. The applied coating was dried for 1 days at 40 deg. C, thus preparing a test plate having a dry coating film with a thickness of about 200 µm. This test plate was immersed at 1.5 m below sea level in Owase City, Mie Prefecture, Japan, and fouling of the test plate was examined for 18 months.
The results are shown in Table 8.
Note that the figures in Table 8 represent the areas (%) to which fouling organisms were attached.

**Table 8**

**Table 8**

| | | Antifouling Test | | | | | |
|---|---|---|---|---|---|---|---|
| | | Area Occupied by Attached Organisms (%) | | | | | Description of Fouling |
| | | 3 months | 6 months | 9 months | 12 months | 18 months | |
| Ex. | 1 | 0 | 0 | 0 | 0 | 0 | None (only Slime) |
| | 2 | 0 | 0 | 0 | 0 | 0 | None (only Slime) |
| | 3 | 0 | 0 | 0 | 0 | 0 | None (only Slime) |
| | 4 | 0 | 0 | 0 | 0 | 0 | None (only Slime) |
| | 5 | 0 | 0 | 0 | 0 | 0 | None (only Slime) |
| | 6 | 0 | 0 | 0 | 0 | 0 | None (only Slime) |
| | 7 | 0 | 0 | 0 | 0 | 0 | None (only Slime) |
| | 8 | 0 | 0 | 0 | 0 | 0 | None (only Slime) |
| | 9 | 0 | 0 | 0 | 0 | 0 | None (only Slime) |
| | 10 | 0 | 0 | 0 | 0 | 0 | None (only Slime) |
| | 11 | 0 | 0 | 0 | 0 | 0 | None (only Slime) |
| | 12 | 0 | 0 | 0 | 0 | 0 | None (only Slime) |
| | 13 | 0 | 0 | 0 | 0 | 0 | None (only Slime) |
| | 14 | 0 | 0 | 0 | 0 | 0 | None (only Slime) |
| | 15 | 0 | 0 | 0 | 0 | 0 | None (only Slime) |
| | 16 | 0 | 0 | 0 | 0 | 0 | None (only Slime) |
| | 17 | 0 | 0 | 0 | 0 | 0 | None (only Slime) |
| | 18 | 0 | 0 | 0 | 0 | 0 | None (only Slime) |
| Comp. Ex. | H-1 | 10 | 30 | 90 | Discontinuation of Test | | Barnacle, Serpula, Sea Squirt |
| | H-2 | 0 | 0 | 0 | 0 | 10 | Serpula |
| | H-3 | 0 | 0 | 0 | 0 | 10 | Serpula |

### Test Example 4 (Physical Property Test of Coating Films)

The test plate used in Test Example 2 (Solubility Test for Coating Films) was subjected to the test while rotating the rotating drum for 18 months in the same conditions as in Test Example 2 The state of the respective coating films of Examples 1 to 18 and Comparative Examples 1 to 3 was observed after 6 months, 12 months, and 18 months from the beginning of the test.

### Evaluation of Physical Properties of Coating Films

A : Swelling, blister, crack, peeling, or the like is not observed in the coating film, and there's no change from the beginning of the test.
B : Swelling, blister, crack, peeling, or the like is not observed in the coating film.
C : Swelling, blister, crack, peeling, or the like is slightly observed in the coating film.
D: Apparent swelling, blister, crack, peeling, or the like is observed in the coating film.

The results are shown in Table 9.

**Table 9**

**Table 9**

| | | Physical Property Test | | |
|---|---|---|---|---|
| | | Coating Film State | | |
| | | 6 months | 12 months | 18 months |
| Ex. | 1 | A | A | A |
| | 2 | A | A | A |
| | 3 | A | A | A |
| | 4 | A | A | A |
| | 5 | A | A | A |
| | 6 | A | A | B |
| | 7 | A | A | A |
| | 8 | A | A | A |
| | 9 | A | A | B |
| | 10 | A | A | A |
| | 11 | A | A | A |
| | 12 | A | B | C: Rough Surface |
| | 13 | A | A | A |
| | 14 | A | A | A |
| | 15 | A | A | A |
| | 16 | B | C: Rough Surface | C: Crack |
| | 17 | A | A | A |
| | 18 | A | A | A |
| Comp. Ex. | H-1 | A | B | B |
| | H-2 | D: Blister | D: Blister, Crack | D: Peeling |
| | H-3 | A | B | B |

## Claims

1. An antifouling coating composition containing a copolymer [A] obtained by copolymerizing a monomer represented by a general formula (1): 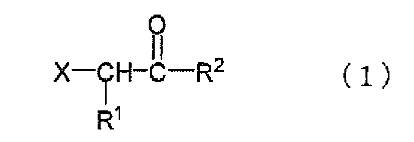 wherein, X represents acryloyloxy, methacryloyloxy, crotonoyloxy, or isocrotonoyloxy, R¹ represents a hydrogen atom or methyl, and R² represents an alkyl group having a carbon number of 1 to 6;
and a polymerizable monomer represented by a general formula (2) 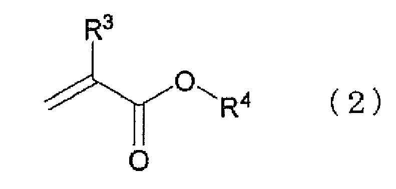 wherein, R³ represents a hydrogen atom or methyl, R⁴ represents an alkyl group having a carbon number of 1 to 10, or an alkyl group having a carbon number of 2 to 5 to which an alkoxy group having a carbon number of 1 to 4 is bonded.

2. The antifouling coating composition of claim 1, wherein when R² in the general formula (1) is an alkyl group having a carbon number of 1 or 2, R⁴ in the general formula (2) is a branched alkyl group having a carbon number of 3 to 10.

3. The antifouling coating composition of claim 2, wherein when R² in the general formula (1) is an alkyl group having a carbon number of 1 or 2, the polymerizable monomer (2) is isobutyl acrylate or isobutyl methacrylate.

4. The antifouling coating composition of claim 1, wherein when R² in the general formula (1) is an alkyl group having a carbon number of 3 to 6, the alkyl group is a branched alkyl group.

5. The antifouling coating composition of any one of claims 1 to 4, wherein the usage amount of the monomer (1) is 10 to 80 weight% with respect to the total weight of the monomers.

6. The antifouling coating composition of any one of claims 1 to 5, wherein the usage amount of the monomer (2) is 20 to 90 weight% with respect to the total weight of the monomers.

7. The antifouling coating composition of any one of claims 1 to 6, further containing an antifoulant [B].

8. The antifouling coating composition of claim 7, wherein the antifoulant [B] is cuprous oxide.

9. The antifouling coating composition of any one of claims 1 to 8, further containing a release modifier [C].

10. The antifouling coating composition of claim 9, wherein the release modifier [C] is at least one kind selected from the group consisting of a rosin, a rosin derivative and a metal salt thereof.

11. The antifouling coating composition of any one of claims 1 to 10, further containing a plasticizer [D].

12. A method of antifouling treatment comprising the step of forming an antifouling coating film on the surface of an object to be coated using the antifouling coating composition of any one of claims 1 to 11.

13. An antifouling coating film formed by using the antifouling coating composition of any one of claims 1 to 11.

14. A coated object having the antifouling coating film of claim 13 on the surface thereof.
